# EUROPEAN PATENT APPLICATION

(11) **EP 2 549 720 A1**
(43) Date of publication of application: **23.01.2013**
(21) Application number: 11174968.5
(22) Date of filing: 22.07.2011
(51) Int. Cl.: H04M 1/725, H04N 13/00

(54) **Method for a mobile electronic device and such a mobile electronic device**

(71) Applicant: ST-Ericsson SA, 1228 Genève Plan-les-Ouates (CH)
(72) Inventor: Persson, Lars, SE-247 91 Södra Sandby (SE)
(74) Representative: Valea AB

(57) **Abstract**

The present invention relates to a method and a mobile electronic device for displaying media in a display. The display is comprised in the mobile electronic device and the mobile electronic device further comprising an accelerometer. The method comprises displaying media in a three dimensional mode on the display, detecting an acceleration variance by means of the accelerometer and changing the displaying of the media between the three dimensional mode and a two dimensional mode based on the detecting of the acceleration variance.

## Description

### TECHNICAL FIELD

The present invention relates to a method in a mobile electronic device, and to such a mobile electronic device. The method comprises displaying media in a three dimensional mode on a display of the mobile electronic device and detecting an acceleration variance of the mobile electronic device.

### BACKGROUND

Nowadays, people often carry around different mobile electronic devices like cell phones or multimedia players with video display functions to watch videos during their commuting time. There is no existing technique which can ensure the stability of images output by a mobile electronic device. Thus, when the mobile electronic device shakes violently along with for example a vehicle, the video displayed in the mobile electronic device will shake along with the mobile electronic device. Especially when displaying a video in three dimensional mode this may be troublesome. An auto-stereoscopic display is a display where a three dimensional effect is obtained by the use of two separate images, one for the left eye, and one for the right eye of the user. A three dimensional effect is thus obtained when the eyes of a user are positioned in such a way that the left eye sees only the left image, and the right eye sees only the right image. Auto-stereoscopic displays are sensitive to positioning of the eyes, i.e. the three dimensional effect only works when the eyes of a user are positioned within a limited zone in front of an auto-stereoscopic display. If a mobile equipment with an auto-stereoscopic display is used in a shaky environment like a vehicle, the three dimensional effect may be disturbed since the relation of the head and the display, and thus the viewport, will change due to the vibrations. When in a vehicle or another situation that causes the user or the display to move, the perspective of the user in relation to the display will change, possibly exceeding the boundary for the stereoscopic effect to work, hence causing annoyance and potentially inducing motion sickness.

US 2010/0079442A1 describes a method of adapting a screen display on a mobile device to reduce motion sickness by reducing the virtual display size to a percentage relative to the amount of motion measured, and then attempting to move the image in the inverse direction to the motion to try and remain more static relative the user, hence reducing the risk of motion sickness.

A problem with the known method is that such motion compensation would not solve the problem related to poor stereoscopic effect leading to annoyance or motion sickness as mentioned above. If a video or other media is shown in a three dimensional mode, moving the image on the display does not affect the positioning of the eyes of a user in relation to the display, and thus in relation to the left image and the right image intended for the left and right eye, respectively.

### SUMMARY

It is therefore an object of the present invention to provide an improved way of displaying media in a mobile electronic device.

According to the present invention, a method in a mobile electronic device for displaying media in a display is provided. A mobile electronic device may be any device where a display may be comprised, such as a portable video player, a portable game console, a cellular phone, a notepad, a computer or the like. The mobile electronic device comprises the display and further comprises an accelerometer. The accelerometer detects acceleration variances. Variances in acceleration may for example occur due to vibrations or fast movements. The method comprises displaying media in a three dimensional mode on the display. Such media may be any media that can be displayed in three dimensions, like a game, a photo or a video for example. The method further comprises detecting an acceleration variance by means of the accelerometer and changing the displaying of the media between the three dimensional mode and a two dimensional mode based on the detecting of the acceleration variance.

By changing the displaying of the media between a three dimensional mode and a two dimensional mode based on the detecting of the acceleration variance, annoyance due to for example poor three dimensional effect due to vibrations or the like are avoided. Further, possible motion sickness due to poor or instable displaying in three dimensional mode is avoided. Still further, the user need not take any action to change between three dimensional mode and two dimensional mode. Thereby, an improved way of displaying media is provided.

In another embodiment, the method further comprises comparing the detected acceleration variance with a threshold value. When the detected acceleration variance passes the threshold value the changing is performed. The term passing is to be understood as the detected acceleration variance passing above a threshold value, as well as the detected acceleration variance passing below a threshold value.

In another embodiment, displaying the media in the three dimensional mode is performed by displaying a first image of the media intended for a left eye of a user of the mobile electronic device, and displaying a second image of the media intended for a right eye of the user of the mobile electronic device, which second image of the media is different from the first image of the media. Changing from displaying in the three dimensional mode to displaying in the two dimensional mode may be performed by changing from displaying different images, i.e. the first image and the second image, to displaying identical images for both the left eye and the right eye of the user. By displaying identical images, the media will be displayed in a two dimensional mode. Alternatively, the only one image of the first and second image may be displayed on the display for both the left eye and the right eye of the user. Thereby, the left eye and the right eye watches the same image and thus the media will be displayed in a two dimensional mode. In yet another alternative embodiment, changing to the two dimensional mode is performed by displaying a common single image achieved by merging the first image and the second image together.

According to another aspect of the invention, a mobile electronic device for displaying media in a display is provided. The mobile electronic device comprises the display. The display is configured to display media in a three dimensional mode and in a two dimensional mode. The mobile electronic device further comprises an accelerometer configured to detect an acceleration variance. The mobile electronic device further comprises a processing unit configured to change the displaying of the media between the three dimensional mode and a two dimensional mode based on detecting of an acceleration variance.

Further features of, and advantages with, the present invention will become apparent when studying the appended claims and the following detailed description. Those skilled in the art will realize that different features of the present invention may be combined to create embodiments other than those described in the following, without departing from the scope of the present invention, as defined by the appended claims.

### BRIEF DESCRIPTION OF THE DRAWINGS

The various aspects of the invention, including its particular features and advantages, will be readily understood from the following detailed description and the accompanying drawings, in which:
Figure 1 is a schematic diagram showing an arrangement in accordance with the present invention.
Figure 2 is a schematic diagram illustrating a crucial positioning of a user for obtaining a three dimensional effect in an auto-stereoscopic display.
Figure 3 is a flow chart depicting a method in a mobile electronic device.

### DETAILED DESCRIPTION

The present invention will now be described in more details with reference to the accompanying drawings, in which example embodiments are shown. However, this invention should not be construed as limited to the embodiments set forth herein. Disclosed features of example embodiments may be combined as readily understood by one of ordinary skill in the art to which this invention belongs. Like numbers refer to like elements throughout.

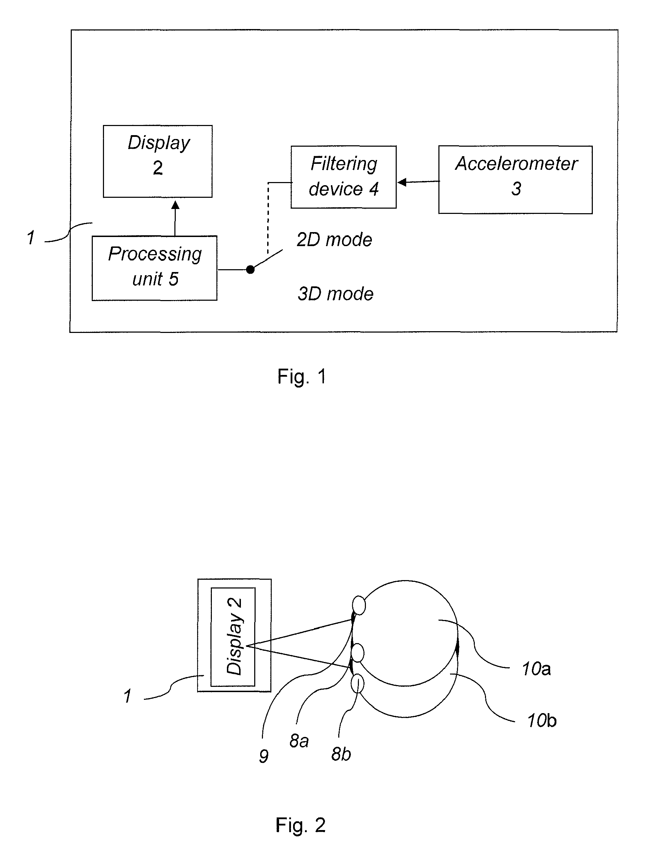

Figure 1 shows an embodiment of mobile electronic device 1 for displaying media in a display 2.

The mobile electronic device 1 comprises a display 2. The display 2 is arranged to display media in a three dimensional mode and to display media in a two dimensional mode. Such media may be any media that can be displayed in three dimensions, like a game, a photo or a video for example. The mobile electronic device 1 may be any device where a display may be comprised, such as a portable video player, a portable game console, a cellular phone, a notepad, a computer or the like. The display 2 may be a an auto-stereoscopic display, or any other type of display capable of displaying media in a two dimensional mode and in a three dimensional mode.

The mobile electronic device 1 further comprises an accelerometer 3. The accelerometer 3 is arranged to detect movements of the mobile electronic device 1 detecting an acceleration variance. Variances in acceleration may for example occur due to vibrations or fast movements such as movements in a moving vehicle when the mobile electronic device 1 is located in a vehicle.

To avoid noise and disturbances, signals from the accelerometer 3 may be filtered through a filtering device 4 within the mobile electronic device 1. Based on detection of the acceleration variance, the displaying of the media is changed from the three dimensional mode to the two dimensional mode is performed, or displaying of the media is changed from the two dimensional mode to the three dimensional mode is performed.

Further, the detected acceleration variance may be compared with a threshold value. When the detected acceleration variance passes the threshold value the changing the displaying of the media between the three dimensional mode and a two dimensional mode will be performed. The mobile electronic device 1 may further comprise a processing unit 5 configured to change the displaying of the media between the three dimensional mode and a two dimensional mode based on detecting of an acceleration variance. Thus, if the acceleration variance passes above a certain predetermined threshold magnitude, the processing unit 5 will switch from a three dimensional mode to enter a two dimensional mode. When the acceleration variance passes below the threshold value, the processing unit 5 will switch back to a three dimensional mode. The processing unit 5 may communicate the three dimensional mode or two dimensional mode to the display 2 comprised in the mobile electronic device 1.

The mobile electronic device 1 further comprises a processor 7 and a memory 8 which will be further described below.

Figure 2 illustrates the crucial positioning of the eyes 8 and 9 of a user 10 of the mobile electronic device 1 for obtaining a three dimensional effect in the display 2. In an auto-stereoscopic display, a three dimensional effect is obtained by the use of two separate images, one for the left eye 8, and one for the right eye 9 of the user 10. The three dimensional effect is thus obtained when the eyes 8, 9 of the user 10 are positioned in such a way that the left eye sees only a left image, and the right eye sees only a right image. Therefore, such displays are sensitive to positioning of the eyes, i.e. the three dimensional effect only works when the eyes of the user are positioned within a limited zone in front of an auto-stereoscopic display. The stereoscopic display requires the user 10 to be within a limited range of view for the three-dimensional effect to work. When the stereoscopic display is comprised in a mobile electronic device 1 and the user 10 is in a vehicle or another situation that causes the user or the mobile electronic device to move, the user's perspective relative to the mobile electronic device will change, possibly exceeding the boundary for the stereoscopic effect to work, causing annoyance or inducing motion sickness.

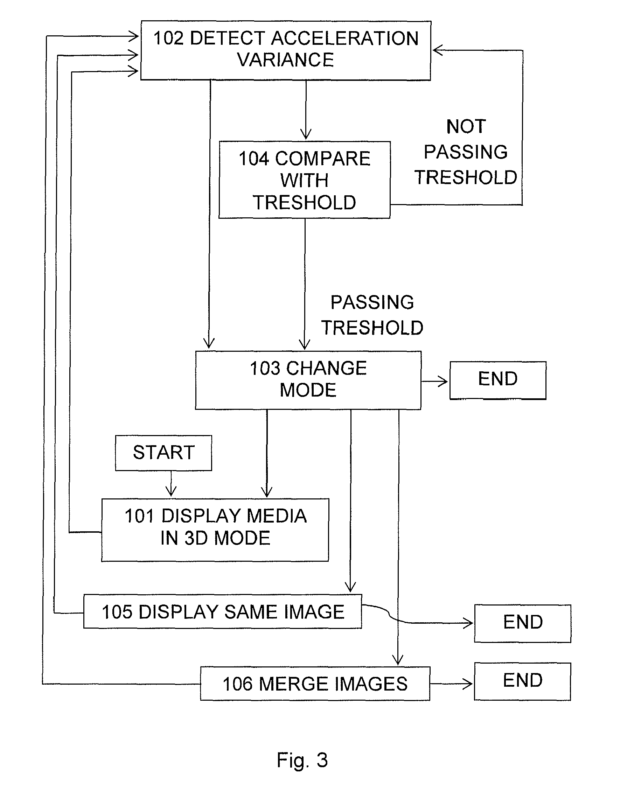

Embodiments of a method in the mobile electronic device 1 for displaying the media in the display 2 will now be described with reference to the flow chart depicted in **Figure 3**. As mentioned above, the display 2 is comprised in the mobile electronic device 1, and the mobile electronic device 1 further comprises the accelerometer 3. The method comprises the steps below, which steps do not have to be performed in the order below, but may be taken in any suitable order.

### Step 101

The mobile electronic device 1 displays media in a three dimensional mode on the display 2.

### Step 102

In this step, the mobile electronic device 1 detects an acceleration variance by means of the accelerometer 3.

### Step 103

Based on the detection of the acceleration variance in step 102 the mobile electronic device 1 changes the displaying of the media between the three dimensional mode and a two dimensional mode. I.e. the mobile electronic device 1 changes the displaying of the media from the three dimensional mode to the two dimensional mode, or changes the displaying of the media from the two dimensional mode to the three dimensional mode.

### Step 104

The changing may be based on comparing the detected acceleration variance with a threshold value and, when the detected acceleration variance passes the threshold value performing the changing. The term passing is to be understood to be either when the detected acceleration variance becomes above or below a threshold value. Thereby, the mode may be changed either from a three dimensional mode to a two dimensional mode or vice versa, depending on the detected acceleration variance.

### Step 105

In an auto-stereoscopic display, displaying 101 a media in a three dimensional mode may be performed by displaying a first image of the media intended for a left eye of a user of the mobile electronic device, and a second image of the media intended for a right eye of the user of the mobile electronic device. Then, the changing 103 from a three dimensional mode to a two dimensional mode may be performed by displaying identical images for both eyes. The changing to two dimensional mode may then be performed by that the first image is displayed on the display for both the left eye and the right eye of the user, or that the second image is displayed on the display for both the left eye and the right eye of the user. Thereby, the media is displayed in a two dimensional mode.

### Step 106

The changing to two dimensional mode may alternatively be performed by displaying a common single image achieved by merging the first image and the second image together. Thus, the changing from a three dimensional mode to a two dimensional mode may be performed by displaying a common single image achieved by merging the first image and the second image together. Thereby, the media is displayed in a two dimensional mode.

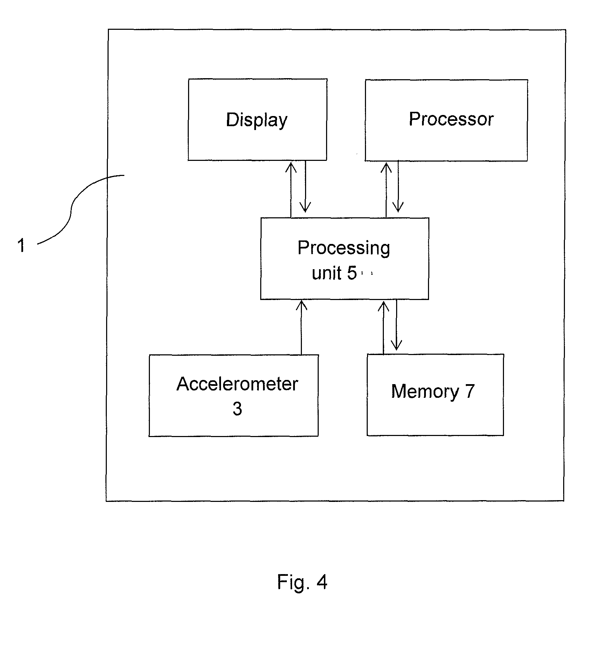

**Figure 4** shows a mobile electronic device 1 in accordance with the present invention. As mentioned above, the mobile electronic device comprises a display 2. The display 2 is configured to display media in a three dimensional mode and in a two dimensional mode. The mobile electronic device 1 further comprises an accelerometer 3 configured to detect an acceleration variance. The mobile electronic device 1 further comprises a processing unit 5 configured to change the displaying of the media between the three dimensional mode and a two dimensional mode based on detecting of an acceleration variance. The processing unit 5 further is configured to compare the detected acceleration variance with a threshold value; and, when the detected acceleration variance passes the threshold value perform the changing. The display 2 is further configured to display the media in three dimensional mode by displaying a first image of the media intended for a left eye of a user of the mobile electronic device 1, and a second image of the media intended for a right eye of the user of the mobile electronic device 1. The processing unit 5 is further configured to change between displaying in three dimensional mode and displaying in two dimensional mode by displaying identical images for both the left eye and the right eye of the user on the display 2. Thereby, the media is displayed in the two dimensional mode. Identical images may be displayed by that the first image is displayed on the display for both the left eye and the right eye of the user, or alternatively that the second image is displayed on the display for both the left eye and the right eye of the user. The display 2 is further configured to display a first image of the media intended for a left eye of a user of the mobile electronic device 1, and a second image of the media intended for a right eye of the user of the electronic device 1. The processing unit 5 is further configured to change between displaying in the three dimensional mode and displaying in the two dimensional mode by displaying a common single image achieved by merging the first image and the second image together and thereby display the media in the two dimensional mode.

The embodiments herein for handling data streams from the mobile electronic device 1, may be implemented through one or more processors, such as the processor 6 depicted in Figure 4, together with computer program code for performing the functions and actions of the embodiments herein. The program code mentioned above may also be provided as a computer program product, for instance in the form of a data carrier carrying computer program code for performing the embodiments herein when being loaded into the mobile electronic device 1. One such carrier may be in the form of a CD ROM disc. It is however feasible with other data carriers such as a memory stick. The computer program code may furthermore be provided as pure program code on a server and downloaded to the mobile electronic device 1.

The mobile electronic device 1 may further comprise the memory 7 comprising one or more memory units. The memory 7 is arranged to be used to store data and applications to perform the methods herein when being executed in the mobile electronic device 1.

Well-known functions or constructions will not necessarily be described in detail for brevity and/or clarity. Example embodiments described above may be combined as understood by a person skilled in the art.

Although the invention has been described with reference to example embodiments, many different alterations, modifications and the like will become apparent for those skilled in the art.

Therefore, it is to be understood that the foregoing is illustrative of various example embodiments and the invention is not to be limited to the specific embodiments disclosed and that modifications to the disclosed embodiments, combinations of features of disclosed embodiments as well as other embodiments are intended to be included within the scope of the appended claims.

Unless otherwise defined, all terms, including technical and scientific terms, used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Example embodiments of the present invention have been described herein with reference to cross-section illustrations that are schematic illustrations of idealized embodiments, and intermediate structures, of the invention. As such, variations from the shapes of the illustrations as a result, for example, of manufacturing techniques and/or tolerances are to be expected. Thus, embodiments of the present invention should not be construed as limited to the particular shapes of regions illustrated herein but are to include deviations in shape that result, for example, from manufacturing.

## Claims

1. A method in a mobile electronic device (1) for displaying media in a display (2), the mobile electronic device (1) comprising the display (2) and further comprising an accelerometer (3),
the method comprising:
- *displaying* (101) the media in a three dimensional mode on the display (2);
- *detecting* (102) an acceleration variance by means of the accelerometer (3);
- *changing* (103) the displaying of the media between the three dimensional mode and a two dimensional mode based on the *detecting* (102) of the acceleration variance.

2. Method according to claim 1, further comprising:
- *comparing* (104) the detected acceleration variance with a threshold value; and, when the detected acceleration variance passes the threshold value performing the *changing* (103).

3. Method according to claim 1 or 2, wherein, *displaying* (101) the media in the three dimensional mode is performed by displaying a first image of the media intended for a left eye of a user of the mobile electronic device (1), and displaying a second image of the media intended for a right eye of the user of the mobile electronic device (1), and wherein, the *changing* (103) between displaying in the three dimensional mode and displaying in the two dimensional mode is performed by displaying identical images for both the left eye and the right eye of the user and thereby displaying the media in the two dimensional mode.

4. Method according to claim 3, wherein only one image of the first and second image is displayed on the display for both the left eye and the right eye of the user, , and thereby displaying the media in the two dimensional mode.

5. Method according to claim 1 or 2, wherein, *displaying* (101) the media in the three dimensional mode is performed by displaying a first image of the media intended for a left eye of a user of the mobile electronic device (1), and displaying a second image of the media intended for a right eye of the user of the electronic device (1), wherein, *changing* (103) to the two dimensional mode is performed by displaying a common single image achieved by *merging* (106) the first image and the second image together and thereby displaying the media in the two dimensional mode.

6. A mobile electronic device (1) for displaying media in a display (2), where the mobile electronic device (1) comprises the display (2), wherein the display (2) is configured to display media in a three dimensional mode and in a two dimensional mode, the mobile electronic device (1) further comprises an accelerometer (3) configured to detect an acceleration variance, and wherein the mobile electronic device (1) further comprises a processing unit (5) configured to change the displaying of the media between the three dimensional mode and a two dimensional mode based on detecting an acceleration variance.

7. Mobile electronic device (1) according to claim 6, wherein the processing unit (5) further is configured to compare the detected acceleration variance with a threshold value; and, when the detected acceleration variance passes the threshold value performing the changing.

8. Mobile electronic device (1) according to claim 6 or 7, wherein the display (2) further is configured to display the media in the three dimensional mode by displaying a first image of the media intended for a left eye of a user of the mobile electronic device (1), and displaying a second image of the media intended for a right eye of the user of the mobile electronic device (1), and wherein the processing unit (5) further is configured to change between displaying in the three dimensional mode and displaying in the two dimensional mode by displaying identical images for both the left eye and the right eye of the user on the display (2) and thereby displaying the media in the two dimensional mode.

9. Mobile electronic device (1) according to claim 8, wherein only one image of the first and second image is displayed on the display for both the left eye and the right eye of the user.

10. Mobile electronic device (1) according to claim 8, wherein the display (2) further is configured to display a first image of the media intended for a left eye of a user of the mobile electronic device (1), and a second image of the media intended for a right eye of the user of the electronic device (1), and wherein the processing unit (5) is further configured to change between displaying in the three dimensional mode and displaying in the two dimensional mode by displaying a common single image achieved by merging the first image and the second image together and thereby displaying the media in the two dimensional mode.
